# EUROPEAN PATENT APPLICATION

(11) **EP 4 166 234 A1**
(43) Date of publication of application: **19.04.2023**
(21) Application number: 21920123.3
(22) Date of filing: 20.10.2021
(51) Int. Cl.: B02C 23/00, B02C 23/08, B02C 23/20, B03C 1/00

(54) **METHOD FOR CRUSHING WASTE GYPSUM BOARDS, AND SILO USED THEREFOR**

(30) Priority: 02.09.2021 JP 2021143113
(71) Applicant: Tokuyama Corporation, Shunan-shi, Yamaguchi-ken 745-8648 (JP)
(72) Inventor: HIRANAKA Shingo, Shunan-shi, Yamaguchi 7458648 (JP); SAITO Akira, Shunan-shi, Yamaguchi 7458648 (JP)
(74) Representative: Marks & Clerk LLP
(86) International application number: PCT/JP2021/038759
(87) International publication number: WO 2023/032231

(57) **Abstract**

Gypsum granules to which wasted gypsum boards are crushed are stored in a silo and discharged from the silo smoothly. Wasted gypsum boards are crushed to gypsum granules and are stored in a silo. A plurality of screw conveyors is provided at the bottom of the silo, and the gypsum granules in the silo are discharged toward outside of the silo by the screw conveyors.

## Description

### Field of the Invention

The present invention relates to the crushing of wasted gypsum boards and a silo therefor.

### Background Art

One of the inventors and another have proposed a method for reclaiming gypsum from wasted gypsum boards (for example, patent document 1: WO2012/176688). Wasted gypsum boards consist of core boards of gypsum and papers on their surface and sometimes contain foreign matters, such as metal. According to the patent document 1, the wasted gypsum boards are first roughly crushed by a cutting machine. The crushed wasted gypsum boards are conveyed by a belt conveyor, and foreign matters, such as metal, are visually removed on the belt conveyor. Next, the roughly crushed wasted gypsum boards are further crushed into gypsum granules by a 4-shaft roll crusher, and the wasted gypsum boards are separated into paper pieces and gypsum granules by a sieve in a subsequent process. Before or after processing by a crusher having the four crushing shafts, metallic foreign matters are further removed by a magnetic separator.

The resulting gypsum granules are calcined to convert them to, for example, hemihydrate gypsum. The converted hemihydrate gypsum, for example, is mixed with gypsum slurry, and gypsum particles, such as dihydrate gypsum, are precipitated in a closed-loop crystallizer. Then the precipitated gypsum particles are solid/liquid separated from the slurry, and the gypsum particles are reclaimed from the wasted gypsum boards. The reclaimed gypsum particles are used as gypsum boards or a raw material for cement, etc.

### Prior Document List

### Patent Document

Patent Document 1: WO2012/176688

### Summary of the Invention

### Problem to be Solved

After crushing wasted gypsum boards, it is preferable to stock the gypsum granules obtained by crushing in a silo. However, gypsum granules obtained from wasted gypsum boards tend to coagulate due to moisture, and it is difficult to discharge the gypsum granules from the silo by gravity. Gypsum granules in a silo often form a bridge (this phenomenon is called "shelf-hanging.") and also tend to adhere on the silo's inner wall. When wasted gypsum boards get wet, such as at a building demolition site, the shelf-hanging and the adherence are particularly likely to occur.

The object of the present invention is to discharge smoothly gypsum granules obtained by crushing wasted gypsum boards from a silo when the gypsum granules are stored in the silo. Means for Solving the Problem

A method for crushing wasted gypsum boards according to the invention comprises: a crushing step for crushing wasted gypsum boards to gypsum granules; and a storage step for storing in a silo the gypsum granules obtained in the crushing step. The method is characterized in that, in the storing step, the gypsum granules in the silo are discharged toward the outside of the silo by a plurality of screw conveyors provided at the bottom of the silo.

A silo according to the invention is for storing gypsum granules to which wasted gypsum boards are crushed. The silo according to the invention is characterized in that a plurality of screw conveyors is provided at the bottom of the silo in order to discharge the gypsum granules toward the outside of the silo. In the specification, descriptions about the crushing method of wasted gypsum boards apply to a crushing system comprising the claimed silo.

The gypsum granules in the silo lose fluidity due to moisture condensation and sometimes can not be discharged from the silo by the free-falling due to gravity. According to the invention, gypsum granules are compulsorily discharged by the screw conveyors at the bottom of the silo. The screw conveyors can discharge the gypsum granules with lowered fluidity. The plurality of screw conveyors is provided at the bottom of the silo such that the gypsum granules are discharged from almost all the bottom of the silo. Thus, the gypsum granules are discharged from almost all the bottom of the silo.

Preferably, the inner wall of the silo is inclined inwardly from a vertical direction toward the inside of the silo. Then, a bridge of the gypsum granules becomes not fully supported by the friction with the inner wall of the silo and becomes naturally collapsed. Gypsum granules adhered on the inner wall of the silo, if present, the gypsum granules become easily peeled off from the inner wall with gravity. By the above mechanisms, the bridging of gypsum in the silo and adhering of gypsum onto the inner wall are prevented.

Preferably, the gypsum granules discharged by the plurality of screw conveyors are collected and discharged by another screw conveyor to the outside of the silo. Since multiple screw conveyors are used, gypsum granules are discharged through a slit or a long hole of a certain length. If the discharged gypsum granules are further discharged through a hopper or the like, additional space is required and the gypsum granules may coagulate in the hopper. Therefore, the gypsum granules are preferably collected in one place and discharged by another screw conveyor.

Preferably, the gypsum granules are accommodated in the silo such that an inner diameter D of the bottom of the silo is not smaller than a storage height H of the gypsum granules in the silo. If the height H is greater than the inner diameter D, the gypsum granules easily coagulate in the silo.

A preferred additional manner of the crushing step will be described. When foreign matters, such as metal, are visually sorted and removed on a conveyor, the foreign matters are sometimes covered by gypsum granules produced by crushing. Then, the foreign matters may not be visible and not removed. Therefore, after the wasted gypsum boards are crushed by the crusher, the crushed wasted gypsum boards are sieved. Then, fine gypsum particles generated by crushing are separated under the sieve. The oversized component that did not pass through the sieve is conveyed by a belt conveyor, and foreign matters therein are easily visible and easily removed on the belt conveyor.

Gypsum granules coarsely crushed from the wasted gypsum boards are large in size and are crushed pieces or coarse granules. It is preferable to crush further these gypsum granules into smaller granules by a fine crusher to a suitable size for subsequent processing. At this time, it is necessary to feed the crushed wasted gypsum boards to the fine crusher in predetermined amounts. Therefore, it is preferable to use a metering conveyor comprising a belt, plural plates connected to and standing up from the belt, sidewalls at both sides of the belt. The gypsum granules conveyed by the foregoing sorting belt conveyor are fed to the metering conveyor, the gypsum granules are fed from the metering conveyor to a fine crusher such that the amount of the gypsum granules are regulated by the plates, and the gypsum granules are further crushed by the fine crusher. In the metering conveyor, the amount of gypsum granules per step (per plate) is determined by the plates and the sidewalls on both sides, and the gypsum granules are fed to the fine crusher in predetermined amounts. Therefore, gypsum granules do not overflow from the fine crusher.

Before supplying the gypsum granules to the silo, foreign matters are removed on the sorting belt conveyor, and metallic foreign matters are further removed, by a magnetic separator, and so on, before or after the fine crushing. Even so treated, small metal fragments, such as screws, nails, and so on, sometimes pass through both the belt conveyor and the magnetic separator. Therefore, preferably, the gypsum granules further crushed by the fine crusher are fed to a pipe, the gypsum granules are transported to the silo by a pressure difference between both ends of the pipe, and a magnet provided at the pipe sorts magnetizable objects from the gypsum granules. Since the magnetizable objects flowing through the pipe in the airflow are not covered by gypsum granules, they are easily adsorbed by the magnet. In this way, the small magnetizable objects that are easily buried in the gypsum granules are removed.

### Brief Description of the Drawing.

Fig. 1: A summary view indicating a method for reclaiming gypsum from wasted gypsum boards according to an embodiment.
Fig. 2: A process diagram indicating the treatment of wasted gypsum boards from crushing to storage in a silo according to the embodiment.
Fig. 3 A schematic view indicating a metering conveyor used in the crushing method according to the embodiment.
Fig. 4 A schematic view indicating a conveyor pipe with magnetic separation function used in the crushing method according to the embodiment.
Fig. 5: A schematic vertical cross-sectional view of a silo used in the crushing method according to the embodiment.
Fig. 6: A schematic plan view indicating the bottom portion of the silo in Fig. 5.

### Features for Carrying out the Invention

An embodiment for carrying out the present invention will be described as follows. The scope of the present invention should be determined based on the claims in accordance with the understanding of those skilled in the art, taking into consideration the description of the specification and the art known in this field. The scope of the present invention is not limited by the embodiment.

### Embodiment

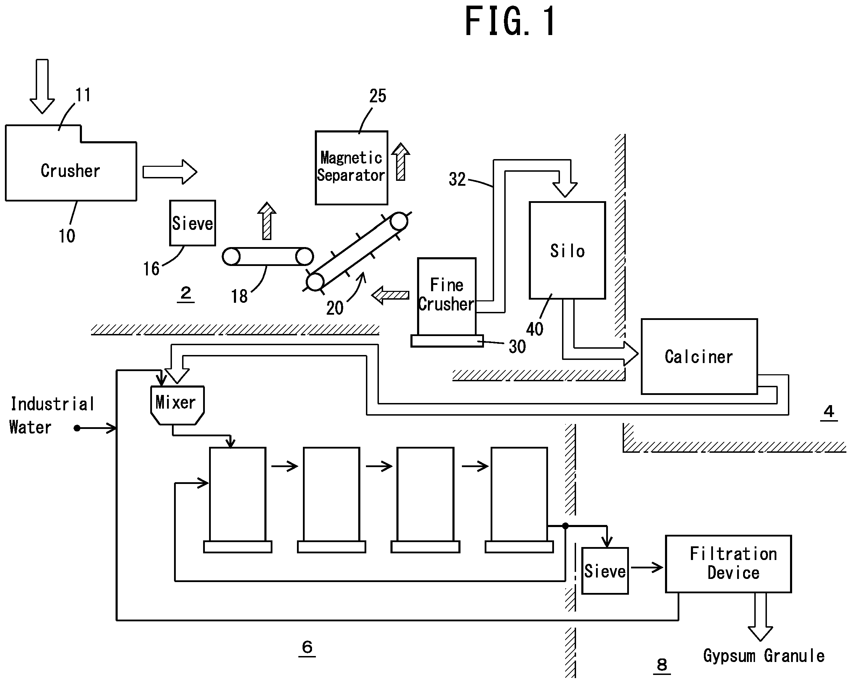

An embodiment is indicated in Figs. 1 to 6. Fig. 1 indicates generally the method for reclaiming gypsum from wasted gypsum boards. Wasted gypsum boards are crushed in a pre-treatment process 2, and the resulting gypsum granules are stored in a silo 40. In the next calcination process 4, the gypsum granules are heated to convert them to hemihydrate gypsum granules, anhydrous type III gypsum, and so on. In a crystallization process 6, the baked gypsum granules are mixed with gypsum slurry, etc., and gypsum particles, such as dihydrate gypsum, are precipitated in crystallization tanks. In the final filtration process 8, the gypsum slurry is sieved to remove paper dust, etc., and then the gypsum slurry is treated in a filtration device to separate gypsum powder. The present invention relates to the pre-treatment process 2.

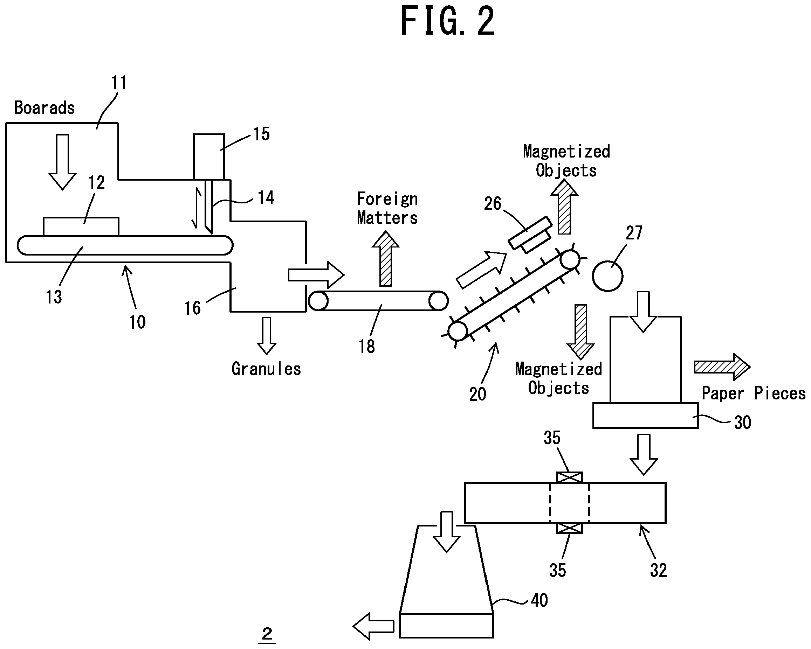

The pre-treatment process 2 is indicated in detail in Fig. 2. Wasted gypsum boards 12 are fed into a crusher 10 from a feed port 11, conveyed by a built-in conveyor 13, and coarsely crushed, for example, by dropping a blade 14. Indicated by 15 is a driving unit for raising the blade 14 and allowing the free fall of the blade 14. A sieve 16 is provided on the exit side of the crusher 10 to separate the gypsum granules produced by crushing under the sieve. The sieve 16 has preferably a sieve opening of 5 to 15 mm. The type of crusher 10 is arbitrary, and when specifying a range by "A to B" or the like in the specification, the upper and lower limits are included. For example, 5 to 15 mm means not smaller than 5 mm and not larger than 15 mm.

After the gypsum granules are separated by a sieve 16, foreign materials, such as metal, mortar, and wood chips, become easily visible from crushed pieces of wasted gypsum boards. Therefore, the oversized component on the sieve 16 (the component not passing the sieve) is fed to a sorting conveyor 18 to sort them on the sorting conveyor 18 by visual inspection, or by image recognition by AI or the like and robot hand, etc.

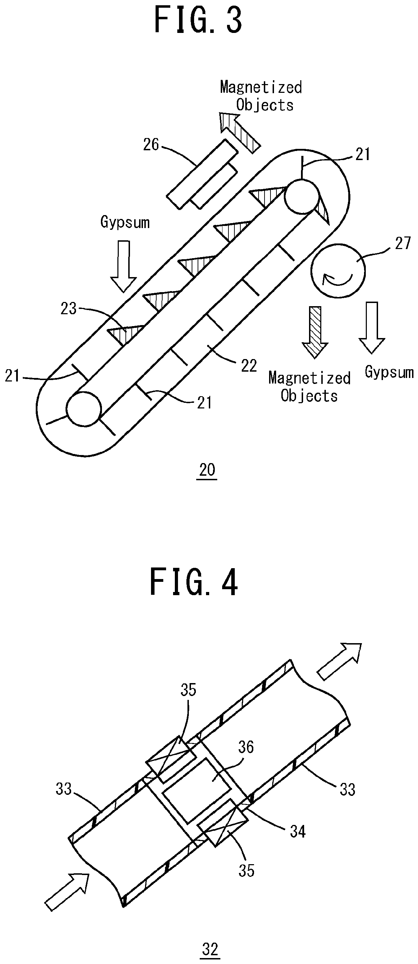

The gypsum granules that have passed through the sorting conveyor 18 are fed into the metering conveyor 20 indicated in Fig. 3. The metering conveyor 20 is a belt conveyor having a belt divided by plates 21 perpendicularly connected to the belt at a predetermined pitch. Both sides of the belt are surrounded by sidewalls 22, the size of accommodation spaces (cells) is determined by the plates 21 and the sidewalls 22. The metering conveyor 20 is inclined from the horizontal plane at an angle of, for example, 30 to 50 degrees, excessive gypsum granules, if present, fed from the sorting conveyor fall into the next cell, and the amount of gypsum granules per cell is limited. Therefore, if the amount of gypsum granules fed from the sorting conveyor 18 in Fig. 2 increases excessively, the gypsum granules do not overflow in the fine crusher 30 in the next stage.

In the metering conveyor 20, a magnetic separator 25, such as a suspended magnetic separator 26 or a magnetizing drum 27, adsorbs magnetizable objects, such as metal, and separates them from the gypsum granules. The removal of magnetizable objects on the conveyor 20 is not part of the invention.

Returning to Fig. 2, the gypsum granules are fed from the metering conveyor 20 to a fine crusher 30, such as a roller crusher, and crushed to a size suitable for the crystallization process 6. In addition, a sieve not shown in the drawing is provided in the fine crusher 30 to separate paper pieces as the oversized component. The gypsum granules under the sieve passed through the sieve are fed to a silo 40 by a magnetic separation pipe 32 in an airflow.

As indicated in Fig. 4, in the magnetic separation pipe 32, a magnetic separation unit 34 is attached to the pipe 33. By depressurizing the outlet side of the magnetic separation pipe 32, the gypsum granules flow with air to the outlet side of the magnetic separation pipe 32. A permanent magnet or electromagnetic magnet 35 is attached to the magnetic separation unit 34 to adsorb the magnetizable objects flowing through the magnetic separation pipe 32. The adsorbed magnetizable objects are then manually removed from the door 36, for example, regularly. The magnetic separation pipe 32 is preferably inclined upward, so that foreign objects with large specific gravity, such as gravel, are separated from the bottom of the pipe 32.

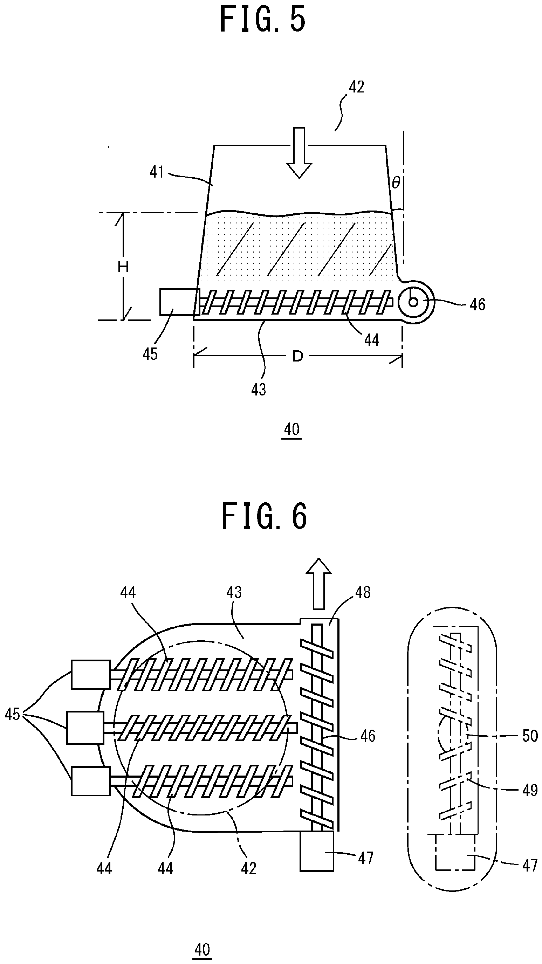

Figs. 5 and 6 indicate the silo 40 for gypsum granules crushed from wasted gypsum boards. With respect to the silo 40, indicated by 41 is the sidewall, 42 is the feed port, and 43 is the bottom. The sidewall 41 is inclined inwardly from the vertical direction, for example, by one degree to 20 degrees, preferably by three degrees to 10 degrees slope, and the bottom 43 is wider than the feed port 42. This angle of inclination is indicated by θ.

The inside diameter of the bottom 43 is indicated by D and the height of the gypsum granules in the silo 40 is H. It is effective to make the inner diameter D greater than or equal to the height H in preventing the gypsum granules from coagulation. In the embodiment, the inner diameter D is, for example, 3-4 m, the height of the gypsum granules in the silo is, for example, 3 m, and the volume of gypsum granules to be stored is, for example, 20m³. The volume of gypsum granules stored in silo 40 is preferably 5m³ to 30m³.

Multiple screw conveyors 44 (for example, three to five) are provided at the bottom 43 of silo 40 and are driven by driving units 45. The screw conveyors 44 convey the gypsum granules to the right side of Figs. 5 and 6.

Another screw conveyor 46 is provided at the bottom 43 and is driven by a driving unit 47 to discharge the gypsum granules through an outlet 48. By the way, as indicated by a chain line on the right side of Fig. 6, another screw conveyor 49 whose conveyance direction of the gypsum granules is reversed in the middle may be provided to discharge the gypsum granules from the outlet 50. Instead of screw conveyors 46 and 49, a hopper might be installed. However, additional space is required for the hopper, and the gypsum granules tend to coagulate within the hopper.

The function of the silo 40 will be described below. The gypsum granules crushed from wasted gypsum boards easily coagulate, and it is difficult to discharge them from the silo 40. Therefore, the multiple screw conveyors 44 convey gypsum granules from almost the entire bottom 43, and the screw conveyor 46 or 49 collects them to discharge them through the discharge port 48 or 50.

Since the gypsum granules are carried out from almost the entire bottom 43 and the sidewall 41 is inclined inwardly, the bridges of gypsum granules naturally collapse. In addition, the gypsum granules adhering to sidewall 41 also fall easily. Furthermore, since the height H of the gypsum granules is smaller than the inside diameter D of the bottom 43, the gap formed by the screw conveyors 44 influences the gypsum granules at the upper portion. These factors prevent the gypsum granules in the silo 40 from shelf-hanging (bridge formation) and sticking to the sidewall 41.

### List of Symbols

- 2: pre-treatment process
- 4: heating process
- 6: crystallization process
- 8: filtration process
- 10: crusher
- 11: feeding port
- 12: wasted gypsum boards
- 13: conveyor
- 14: blade
- 15: driving unit
- 16: sieve
- 18: sorting conveyor
- 20: metering conveyor
- 21: plate
- 22: sidewall
- 23: gypsum granules
- 26: suspended magnetic separator
- 27: magnetizing drum
- 30: fine crusher
- 32: magnetic separation pipe
- 33: pipe
- 34: magnetic Separation Unit
- 35: magnet
- 36: door
- 40: silo
- 41: sidewall
- 42: feed port
- 43: bottom
- 44, 46, 49: screw conveyor
- 45, 47: driving unit
- 48, 50: discharge port

## Claims

1. A method for crushing wasted gypsum boards comprising:
a crushing step for crushing wasted gypsum boards to gypsum granules; and
a storage step for storing in a silo the gypsum granules obtained in the crushing step,
being **characterized in that**, in said storing step, the gypsum granules in the silo are discharged toward outside of the silo by a plurality of screw conveyors provided at the bottom of the silo.

2. The method for crushing wasted gypsum boards according to claim 1, being **characterized in that** inner wall of the silo is inclined inwardly from a vertical direction toward inside of the silo such that a bridge of gypsum granules is prevented from occurring inside the silo.

3. The method for crushing wasted gypsum boards according to claim 1 or 2, being **characterized in that** the gypsum granules discharged by the plurality of screw conveyors are collected and discharged to outside of the silo by another screw conveyor.

4. The method for crushing wasted gypsum boards according to one of claims 1 to 3, being **characterized in that** the gypsum granules are accommodated in the silo such that an inner diameter D of the bottom of the silo is not smaller than a storage height H of the gypsum granules in the silo.

5. The method for crushing wasted gypsum boards according to one of claims 1 to 4, being **characterized, in** said crushing step, **in that** the wasted gypsum boards are crushed by a crusher, that the crushed gypsum boards are treated by a sieve, that oversized component that did not pass the sieve is conveyed by a belt conveyor, and that foreign matters in the oversized component are removed on the belt conveyor.

6. The method for crushing wasted gypsum boards according to claim 5, being **characterized, in** the crushing step, **in that** a metering conveyor comprising a belt, plural plates connected to and standing up from the belt, sidewalls at both sides of the belt is used,
that the gypsum granules conveyed by said belt conveyor are fed to the metering conveyor, that the gypsum granules are fed from the metering conveyor to a fine crusher such that the amount of the gypsum granules is regulated by the plates, and that the gypsum granules are further crushed by a fine crusher.

7. The method for crushing wasted gypsum boards according to claim 6, being **characterized, in** said crushing step, **in that** the gypsum granules further crushed by the fine crusher are fed to a pipe, that the gypsum granules are transported to said silo by a pressure difference between both ends of the pipe, and that a magnet provided at the pipe sorts magnetizable objects from the gypsum granules.

8. A silo for storing gypsum granules to which wasted gypsum boards are crushed, being **characterized in that** said silo comprises a plurality of screw conveyors provided at the bottom of the silo in order to discharge the gypsum granules toward outside of the silo.
